# FASCICULE DE BREVET EUROPEEN

(11) **EP 0 604 615 B1**
(45) Date de publication et mention de la délivrance du brevet: **23.09.1998**
(21) Numéro de dépôt: 93914582.7
(22) Date de dépôt: 12.07.1993
(51) Int. Cl.: A47J 31/40, A47J 31/06

(54) **PROCEDE D'EXTRACTION DE SACHETS SOUPLES FERMES ET SON DISPOSITIF**
VERFAHREN UND VORRICHTUNG ZUR EXTRAKTION UNDURCHLÄSSIGER, VERFORMBARER PORTIONSPACKUNGEN
EXTRACTION METHOD FOR SEALED FLEXIBLE BAGS AND DEVICE THEREFOR

(30) Priorité: 20.07.1992 EP 92112364
(43) Date de publication de la demande: 06.07.1994
(73) Titulaire: SOCIETE DES PRODUITS NESTLE S.A., 1800 Vevey (CH)
(72) Inventeur: FOND, Olivier, CH-1400 Yverdon (CH); LAVANCHY, Gérard, CH-1008 Prilly (CH); PLEISCH, Jean-Pierre, CH-1803 Chardonne (CH); SCHAEFFER, Jacques, CH-1803 Chardonne (CH); YOAKIM, Alfred, CH-1814 La Tour-de-Peilz (CH)
(74) Mandataire: Thomas, Alain
(86) Numéro de dépôt international: CH9300180
(87) Numéro de publication internationale: WO9402059

(56) Documents cités:
- EP-A- 0 006 175
- EP-A- 0 512 142
- EP-A- 0 521 187
- EP-A- 0 521 188
- WO-A-86/02537
- WO-A-92/07775
- CH-A- 406 561
- CH-A- 668 545
- FR-A- 1 410 288
- FR-A- 2 556 201
- GB-A- 1 215 840
- US-A- 3 327 614
- US-A- 3 607 297

## Description

L'invention concerne un procédé d'extraction de sachets souples fermés contenant au moins une substance pour la préparation d'une boisson, ledit sachet étant constitué de deux feuilles souples minces de même matière, soudées sur leur périphérie et sensiblement symétriques l'une de l'autre par rapport au plan de soudage, la dite substance pouvant être soit pulvérulente, soit compactée sous forme de galette de forme appropriée en un ou plusieurs morceaux.L'invention concerne en outre le dispositif pour la mise en oeuvre du procédé.

L'utilisation de portions prédosées et préemballées de café moulu pour la préparation de café type espresso présente l'avantage de faciliter les opérations de préparation du café tout en garantissant une relative constance de qualité du produit.

Ces portions se présentent actuellement sous deux formes principales.

Selon une première forme générale, les portions décrites dans les brevets CH 636' 311, US 5'012'629, EPA 0'272'432 et EPA 6175 sont constituées de deux feuilles en papier filtre soudées sur leur périphérie et remplies de café moulu. Cette solution présente le désavantage de nécessiter un suremballage étanche afin d'éviter l'oxydation du produit pendant le stockage. Ce suremballage constitue un coût additionnel et une opération supplémentaire de la part du consommateur qui doit l'éliminer avant de procéder à l'extraction du café désiré.

Selon une deuxième forme, décrite dans la demande WO 92/07775, la portion est constituée d'une capsule étanche à fond concave s'ouvrant dans son dispositif d'extraction par déformation sous l'effet de l'introduction du fluide d'extraction, puis perforation contre des pointes. Cette capsule, constituée d'une enveloppe étanche formant une paroi latérale ainsi que deux parois dont l'une constitue le fond de la cartouche et l'autre ferme l'extrémité opposée de la cartouche, présente l'inconvénient d'employer simultanément plusieurs matériaux d'emballage différents, dont l'un au moins doit être suffisamment épais pour lui conférer une semi-rigidité. Elle ne peut être utilisée que dans un seul sens avec un dispositif d'extraction parfaitement adapté à la capsule comme à sa disposition. De plus elle est relativement volumineuse, le café n'y étant pas compacté.

L'objet de la présente invention est de proposer un procédé et un dispositif permettant l'extraction d'un sachet souple fermé sans ouverture préalable, le procédé ne nécessitant aucune exigence particulière quant au positionnement des faces supérieure et inférieure du sachet.

L'invention concerne un procédé dans lequel on met en place et on serre ledit sachet dans son dispositif d'extraction constitué d'une chambre fermée et comportant un portesachet, on introduit dans le sachet un mélange d'air et d'eau à une pression comprise entre 2 et 20 bar, au moyen d'un organe d'amenée d'eau comportant des moyens destinés à perforer la face supérieure du sachet, de manière à étirer progressivement et localement la face d'extraction du sachet contre une surface en relief du porte-sachet comportant des éléments en relief et en creux, ladite face d'extraction se déchirant en des endroits multiples selon un tracé prédéterminé par l'emplacement desdits éléments en relief et/ou en creux en y atteignant sa tension de rupture, pour permettre l'écoulement du liquide après extraction et dans lequel le porte-sachet et l'organe d'amenée d'eau coopèrent entre eux pour assurer l'étanchéité par pincement de la bordure du sachet et ménageant entre eux, chacun sensiblement pour moitié, une cavité assurant une forme définie du sachet.

Le procédé est également caractérisé par la valeur élevée de la pression d'extraction, car sa valeur maximum n'est pas obligatoirement atteinte lors de l'ouverture du sachet, mais peut l'être plus tard au cours de l'extraction, lorsque la perte de charge à travers le lit de café a atteint son maximum.

Le procédé sera mieux compris par la description de ses phases successives, pouvant être réalisées, dans le cas particulier de son utilisation pour du café, à partir de machines espresso du commerce comportant les moyens, dès la construction ou par adjonction d'adaptateurs, pour perforer l'une des faces du sachet, introduire l'eau à l'intérieur, déchirer de manière contrôlée l'autre face par suite de sa déformation sous l'effet de la pression et recueillir l'extrait de café.
- Dans un premier temps, le sachet est mis en place dans le porte-sachet, la face inférieure dans cette disposition devenant alors la face d'extraction.
- Dans un deuxième temps, le porte-sachet muni du sachet est mis en place dans la machine, la face supérieure dudit sachet est alors perforée par le ou les éléments tranchants ou perforants placés sous la face inférieure de la partie supérieure de la cavité d'extraction.

Au cours de cette étape, la forme du sachet peut être volontairement modifiée par rapport à sa forme initiale par adaptation à la configuration de la cavité du dispositif d'extraction. Ainsi la forme du sachet est parfaitement définie préalablement à l'extraction, lors de sa mise en place, même après avoir subi des déformations éventuelles consécutives aux manipulations antérieures, en particulier lorsque ledit sachet contient un produit faiblement compacté ou même non compacté.

Selon une variante du procédé, l'opération de mise en place comporte un effet de serrage qui réduit le volume intérieur disponible du sachet afin de limiter à un minimum défini les endroits non remplis par la substance à extraire. En effet, selon le mode de fabrication dudit sachet, son volume initial peut être supérieur à celui de la substance contenue, s'il est désiré que cette substance soit légèrement compactée avant extraction, comme celà est le cas avec le café moulu. Cette adaptation du volume disponible permet de favoriser l'extraction; la substance étant régulièrement disposée dans ladite cavité, elle est correctement traversée par le fluide d'extraction et de plus, lors de son évacuation, le sachet n'est pas gorgé d'eau en excès, ce qui favorise la propreté et l'aspect pratique du procédé.

De plus, la face supérieure souple du sachet peut, sous l'effet de la pression de l'eau et du gonflement du café, venir se plaquer contre la face supérieure de la chambre, améliorant d'autant le mouillage du café et pour autant la qualité de son extraction.
Selon une autre variante du procédé, des moyens auxiliaires prévus sous la face supérieure du dispositif d'extraction et/ou sur la face inférieure dudit dispositif, permettent de déplacer le café du sachet vers des zones déterminées et privilégiées afin de favoriser la qualité de l'extraction en évitant les zones mortes.

Ces moyens peuvent constituer en une forme géométrique particulière des dites faces.

En effet, afin de régulariser l'extraction d'un lit de substance, il est souhaitable que ce lit ne soit ni trop mince ni d'une épaisseur inégale. Or, avec un sachet souple, ces défauts pourraient être observés si l'on ne mettait pas en oeuvre les moyens décrits ci-dessus.

Dans une variante de sachets contenant du café compacté lors de la production, le volume de la cavité correspond de plus près à la dimension de la galette et du sachet afin d'éviter des zones libres entre le sachet et la galette et des chemins préférentiels intempestifs lors de l'extraction.
- Dans un troisième temps, l'eau mélangée ou non à de l'air est introduite dans le sachet sous une pression de 2 à 20 bar, de préférence de 4 à 15 bar. Les faces du sachet se plaquent contre les parois de la cavité d'extraction, la face d'extraction se déformant localement en s'étirant progressivement sous l'effet de la pression sur les éléments en relief du porte-sachet muni des orifices d'évacuation de l'infusion. Cette phase essentielle assure un temps de prémouillage du café avant extraction.

L'air peut être celui présent dans les conduites de ladite machine qui se mélange à l'eau lors de la mise en route du processus d'extraction.

Dans certaines conditions, selon les machines espresso employées et la température initiale de chauffage, les premières fractions d'eau peuvent se présenter sous forme de vapeur.

Selon une variante du procédé, un temps de pause, avec arrêt de l'injection du fluide d'extraction entre le troisième et le quatrième temps, peut être observé.
- Dans un quatrième temps, la matière constituant ladite face d'extraction atteignant, suite à son étirage, sa tension de rupture, les déchirures s'amorçent à l'emplacement des parties saillantes du relief ou dans les parties creuses formées entre lesdites parties en relief. Selon la forme du relief, les déchirures peuvent aussi se prolonger dans les deux zones mentionnées précédemment. Les parties ainsi fracturées sans se détacher de la face d'extraction libérée de sa tension viennent s'appliquer précisément contre le relief avec pour effet d'agrandir les ouvertures réalisées, favorisant l'écoulement ultérieur du fluide d'extraction, mais de telle manière qu'aucune dispersion de matière ne se fasse en dehors du sachet. La pression interne du sachet chute partiellement, mais cette décompression momentanée est limitée car le flux de fluide qui s'échappe du sachet est laminé tant par les faibles interstices constitués par les lèvres de la matière déchirée de la face d'extraction s'appuyant sur le relief que par les orifices d'écoulement pratiqués dans ou au voisinage de l'élément en relief. L'écoulement est ainsi parfaitement contrôlé, excluant notamment tout déplacement intempestif de la phase solide du contenu du sachet qui pourrait obstruer les orifices d'écoulement et gêner ultérieurement la régularité et la reproductibilité du processus d'extraction.

Selon la terminologie employée dans le brevet CH 668'545 concernant une capsule avec opercule pré-affaibli, cette phase d'ouverture du sachet peut être considérée comme une phase d'aération de la matière pulvérulente.

Selon une variante du procédé, un temps de pause, avec arrêt de l'injection du fluide d'extraction entre le quatrième et le cinquième temps, peut être observé.
- Dans un cinquième temps, le café est extrait sous une pression de 2 à 20 bar, cette pression étant volontairement et essentiellement liée à la perte de charge à travers le lit de café mouillé et par là-même compacté. Il s'agit de la phase d'extraction.

Des cuvertures complémentaires de la face d'extraction peuvent au besoin être produites par les parties en relief du porte-sachet de hauteur dégressive prévues de préférence en sa zone périphérique lorsque la pression d'extraction atteint des valeurs élevées.
- Dans un sixième temps, le porte-sachet est libéré et le sachet est évacué, par exemple par simple retournement du porte-sachet.

Dans une variante du système dite à mâchoire, décrite plus loin, l'éjection du sachet s'effectue manuellement à l'aide d'un insert ou automatiquement dans un récipient adéquat à la fin du cinquième temps.

Selon une première variante du procédé, les déchirures sont produites dans la partie centrale des cavités (creux) formées entre les parties saillantes d'un élément en relief lorsque la matière atteint sa tension de rupture à la flèche de sa déformation.

Selon une deuxième variante de mise en oeuvre du procédé, l'amorce de déchirure de la face d'extraction du sachet peut se faire au niveau des éléments en relief puis se prolonger dans le centre des cavités (creux) formées par lesdits éléments.

Selon une troisième variante du procédé, l'ouverture de la face d'extraction se fait par obtention de la tension de rupture à l'emplacement d'éléments en relief éventuellement associés à des éléments complémentaires, qui n'ont pas vocation à déchirer la face d'extraction du sachet mais à favoriser l'écoulement, tout en garantissant la propreté du système.

L'extrait de café parvient à passer entre les parties déchirées et déformées de la face d'extraction du sachet jusqu'à des orifices d'écoulement, car ces parties déchirées ne peuvent se plaquer de manière parfaitement étanche contre le relief du fait d'une certaine rigidité relative due à leurs dimensions assez réduites.

Le nombre des déchirures, réalisées dans la face d'extraction, se situe préférentiellement à plusieurs dizaines. De manière générale, la géométrie des éléments en relief est agencée de telle façon que les parties déchirées ne se détachent pas complètement, mais restent solidaires du sachet.

La description donnée ci-après à titre d'exemple d'application au café torréfié et moulu n'est pas limitative, le procédé étant applicable à d'autres produits ou mélange de produits enfermés dans un sachet souple tel du thé, du café soluble, un mélange de café moulu et de café soluble, un produit chocolaté ou un aliment déshydraté et destinés à l'obtention de boissons ou d'aliments sous forme d'infusions.

Le sachet utilisé pour la mise en oeuvre du procédé selon l'invention peut être d'un type semblable à celui faisant l'objet de la demande de brevet européen 92'111'422.9, déposée le 6 juillet 1992 par la demanderesse, sous le titre "Sachet souple fermé et son procédé de fabrication".

Le diamètre intérieur du sachet se situe de préférence entre 25 et 70 mm et la bordure soudée a une largeur de 3 à 15 mm. Une fois rempli, le sachet présente une épaisseur en son centre, de préférence entre 5 et 20 mm. Dans le cas du café, la dose contenue peut varier entre 5 et 20 g de café moulu compacté ou non sous forme de galette. La forme générale du sachet est circulaire, ovale ou polygonale de 4 à 10 côtés à bords éventuellement arrondis, ou peut être une combinaison de ces trois éléments.

La face d'extraction du sachet après sa mise en place dans la machine n'est pas obligatoirement située dans un plan horizontal. D'autres orientations peuvent être préférées pour la commodité des procédés de mise en oeuvre.

L'invention concerne en outre le dispositif pour la mise en oeuvre du procédé. Ce dispositif comprend une pièce supérieure munie des moyens destinés à perforer la face supérieure du sachet et permettre l'introduction de l'eau dans ledit sachet, une pièce inférieure présentant des éléments en relief et en creux constituant la zone d'écoulement, les deux pièces coopérant entre elles pour assurer l'étanchéité par pincement de la bordure du sachet et ménageant entre elles, chacune sensiblement pour moitié, une cavité assurant une forme définie du sachet, non nécessairement identique à la forme initiale du sachet, le serrage étant assuré par l'intermédiaire de moyens de fixation annexes rendant solidaires lesdites pièces supérieure et inférieure.

Selon une disposition particulière de la cavité d'extraction, son volume intérieur est inférieur au volume initial du sachet. Cette disposition s'applique en particulier à l'extraction de sachets non compactés.

Selon une autre disposition particulière de la cavité d'extraction, la pièce supérieure et/ou la pièce inférieure disposent d'éléments contribuant à déplacer la substance à extraire à l'intérieur même du sachet en des zones déterminées et privilégiées.

Ces éléments peuvent se présenter sous la forme de protubérances disposées sur la face inférieure de la pièce supérieure et/ou d'une géométrie particulière de la face supérieure de la pièce inférieure du dispositif d'extraction, de préférence circulaires, hélicoïdaux ou sous forme de portions de droites ou d'arcs. Cette disposition s'applique en particulier à l'extraction de sachets non compactés.

Selon une première variante d'éxécution du dispositif d'introduction de l'eau, les moyens de la pièce supérieure destinés à perforer la face supérieure du sachet et à introduire l'eau dans le sachet peuvent se présenter sous la forme d'une grille de répartition d'eau pourvue sur sa face inférieure d'éléments tels des pointes, lames ou croix saillantes, par exemple ceux décrits dans la demande de brevet européen 91'111'211.8, déposée le 5 juillet 1991. Les orifices de passage de l'eau ne coïncident pas obligatoirement avec lesdits éléments, mais peuvent avantageusement se trouver en leur périphérie.

Selon une seconde variante, on peut prévoir une ou plusieurs aiguilles d'injection d'eau, disposées en saillie dans la cavité de la pièce supérieure, par exemple du type décrit dans la demande de brevet européen 90'114'402.2, déposée le 27 juillet 1990. Une telle aiguille permet de perforer la face supérieure du sachet lors de la mise en place dans le dispositif complet et d'injecter le fluide à l'antérieur dudit sachet.

La ou les aiguilles d'introduction de l'eau sont conçues selon une forme effilée, de telle manière qu'elles perforent le matériau du sachet selon des ouvertures capables de se refermer au moins partiellement, ce afin de minimaliser le dégorgement lors du retrait du sachet. De plus, elles n'empêchent pas le sachet de se gonfler et de se plaquer contre la paroi avoisinante. Enfin les dimension et disposition de ces organes d'introduction de l'eau sont choisies de façon à ne pas créer des chemins préférentiels intempestifs dans le lit de café, mais au contraire à l'irriguer régulièrement dans tout son volume. La forme, la dimension et la disposition de la ou des aiguilles sont adaptées à la forme et à la dimension du sachet.

Dans le cas d'une disposition comportant plusieurs aiguilles d'introduction de l'eau, il peut être avantageux de monter ces aiguilles sur une pièce capable d'un mouvement rotatif afin de ne pas déchirer le sachet, ce mouvement étant alors synchronisé par entraînement lors de l'insertion du porte-sachet.

Selon une variante préférée d'éxécution de la pièce supérieure et de sa partie solidaire participant au serrage, ces pièces peuvent faire intégralement partie de machines espresso spécialement conçues pour l'extraction de tels sachets.

Selon une disposition usuelle de cette variante, le moyen de serrage solidaire de la pièce supérieure se présente sous la forme connue de rampes de serrage, de préférence de 2 à 3, que l'on trouve habituellement dans les machines espresso avec dispositif de fixation dit à baïonnette.

Selon une forme particulière de réalisation, la pièce inférieure amovible entraîne la rotation simultanée de la partie intérieure de la pièce supérieure comportant l'organe d'introduction de l'eau, évitant ainsi tout risque de déchirure intempestive du sachet lorsque l'organe d'introduction de l'eau comporte plusieurs orifices.

Selon une variante d'éxécution de la pièce supérieure et de sa partie solidaire participant au serrage, lesdites pièces peuvent faire partie d'une pièce plus globale amovible et adaptable dans les machines espresso usuelles du commerce et qui permet alors l'extraction de tels sachets.

Dans une première disposition de cette variante, l'adaptation permettant l'extraction de sachets est réalisée à partir de deux pièces dont l'une peut rester en place de façon temporaire dans la machine espresso. La première pièce, nommée adaptateur, s'adapte sur la machine espresso pour laquelle elle est prévue et la seconde, nommée porte-sachet, se monte sur cette première.

La première de ces pièces, l'adaptateur, comporte sur l'extérieur des pattes de serrage prévues pour s'engager sur les rampes de serrage primaires de la machine espresso. Elle comporte également, sur l'intérieur, des rampes de serrage secondaires, une cavité et des moyens destinés à perforer la face supérieure du sachet et à introduire l'eau. Cette première pièce peut rester temporairement en place dans la machine et être bloquée en rotation à l'aide d'une vis de serrage.

La seconde pièce, le porte-sachet, comporte des pattes de serrage prévues pour s'engager sur les rampes de serrage secondaires de la pièce précédente, ainsi qu'une cavité et des éléments en relief et en creux sur une pièce comportant des trous d'écoulement (pièce inférieure).

Ces deux pièces sont du type de l'invention faisant l'objet de la demande de brevet européen 91'111'212.6 déposée le 5 juillet 1991 mais adaptées spécialement pour l'extraction de sachets souples, en particulier s'agissant de la forme de la cavité destinée à recevoir ledit sachet, de l'organe d'introduction de l'eau et de la pièce d'écoulement.

Dans une seconde disposition de cette variante, l'adaptation permettant l'extraction de sachets est réalisée avec deux pièces qui doivent d'abord être associées avant que l'ensemble ne soit mis en place dans la machine espresso.

La pièce supérieure, posée ou articulée sur la pièce inférieure, comporte des éléments adaptés à la pièce de répartition d'eau de la machine espresso et destinés à coopérer avec le joint d'étanchéité de ladite machine, - une cavité et des moyens destinés à perforer la face supérieure du sachet et à injecter l'eau.

La pièce inférieure comporte des pattes de serrage prévues pour s'engager sur les rampes de serrage de la machine espresso ainsi que des éléments en relief et/ou en creux solidaires d'une pièce servant de grille d'écoulement. Cette pièce correspond au porte-sachet. Manipulé à l'aide d'une poignée, l'ensemble formé par la pièce inférieure et supérieure suit un mouvement rotatif ascendant ou descendant, une fois engagé dans les rampes de serrage de la machine espresso.

Ces deux pièces sont du type de l'invention faisant l'objet de la demande de brevet européen 91'111'211.8 déposée le 5 juillet 1991 mais adaptées spécialement, en particulier s'agissant de la réalisation de la cavité destinée à recevoir ledit sachet, pour l'extraction de sachets souples.

Selon une forme de réalisation particulière de la pièce inférieure du dispositif d'extraction et de ses moyens de fixation, ces pièces peuvent être sous la forme d'un porte-sachet du type du porte-cartouche décrit dans la demande de brevet européen 92'107'548.7 déposée le 5 mai 1992 mais adapté à l'extraction de sachets souples. Le porte-sachet peut alors reprendre les éléments spécifiques décrits dans cette demande précédente et en particulier, en ce qui concerne son dispositif d'étanchéité, la distinction possible entre porte-sachet et support de porte-sachet avec possibilité de rotation de l'un par rapport à l'autre, la possibilité d'intégrer un ou deux cônes à l'intérieur afin de distinguer éventuellement l'écoulement de l'extrait et le reflux de substance une fois extraite.

La partie inférieure de la chambre et la pièce comportant les éléments en relief ne sont pas obligatoirement solidaires.

Le porte-sachet peut être en une seule pièce, comportant la pièce inférieure et son support incluant les moyens de serrage ou en deux pièces se composant d'une part de la pièce inférieure (incluant les éléments en relief et en creux sur une pièce assurant l'écoulement) et d'autre part du support de cette pièce incluant les moyens de serrage.

En particulier, en référence au dispositif d'étanchéité, selon une première disposition, la face inférieure extérieure de la pièce supérieure présente un bord conique. Une partie conique correspondante lui fait face à la périphérie du porte-sachet. Les deux parties s'engagent l'une dans l'autre, pinçant la bordure du sachet. Les angles sont préférentiellement un peu différents pour chacun des deux cônes, limitant la zone de contact théorique à une étroite couronne.

Dans une deuxième disposition du dispositif d'étanchéité, la partie inférieure de la pièce supérieure presse le rebord du sachet contre un joint torique élastique placé en périphérie du porte-sachet.

Dans une variante préférée de réalisation du dispositif, la pièce avec éléments en relief et en creux et cône d'étanchéité comporte un record dont la partie inférieure a la forme d'un anneau sphérique convexe dont le centre de courbure coïncide avec l'axe perpendiculaire au plan de la surface d'appui du sachet, ce rebord sphérique prenant librement appui sur un siège présentant une surface concave de même courbure, solidaire de la pièce inférieure (support de porte-sachet) et préférentiellement constitué d'une matière à faible coefficient de glissement. Il en résulte que l'ensemble constitue un assemblage à rotule. Il est évident que le sens des courbures peut être inversé.

Dans une variante préférée, l'étanchéité se fait au moyen d'un point souple, caractérisé par le fait qu'il se situe libre dans un logement lui permettant, sous la pression de l'eau qui se trouve entre le joint et le fond du logement, de pousser ledit joint et l'amener à s'écraser contre le bord du sachet. Dans cette variante, l'eau sous pression poussant verticalement le joint est amenée par le fond du logement.

Selon une deuxième configuration de cette variante, le logement recevant le joint souple présente un jeu radial seulement. L'eau qui déforme le joint est alors directement celle contenue dans la chambre d'extraction.

Dans les deux configurations ci-dessus, le joint peut être torique, cylindrique ou d'une autre forme connue du commerce.

Selon une disposition particulière du dispositif d'étanchéité, les pièces supérieure et inférieure présentent des éléments complémentaires et destinés à s'emboîter qui permettent de tendre les faces du sachet lors du serrage de l'ensemble (pièce inférieure contre pièce supérieure avec sachet mis en place entre les deux).

Dans le cas où le sachet présente, dans la zone périphérique de ses deux faces, des ondulations créées lors de la fabrication afin de compenser sans apparition de pli aléatoire la mise en volume des deux feuilles planes, les faces délimitant les cavités des pièces supérieure et inférieure du dispositif d'extraction, ainsi que leur bordure assurant l'étanchéité lors de l'extraction, peuvent présenter un relief sous forme d'ondulations compatibles avec celles du sachet.

Une disposition analogue de la zone de contact entre la pièce supérieure et la pièce inférieure peut être avantageusement prévue même dans le cas de l'extraction de sachets souples dont la périphérie est plane. Dans cette disposition, les ondulations sont toutefois de faible amplitude, juste suffisantes à tendre le bord du sachet pour en supprimer les plis accidentels.

Les éléments en relief assurant l'ouverture de la face d'extraction du sachet sont de même nature que tes cinq types décrits dans la demande de brevet européen 92'107'548.7 déposée le 5 mai 1992.

Dans une première forme de réalisation, les éléments en relief sont constitués de petites baguettes rectilignes ou légèrement sinueuses ou sous forme d'arcs, fermés ou non, présentant des longueurs distinctes et disposées de façon radiale, concentrique, parallèle ou perpendiculaire sur une grille percée de très nombreux petits trous. Leur section peut être semi-circulaire ou approximativement trapézoïdale. Leur largeur et hauteur mesurent de 0.5 à 7 mm.

Dans une deuxième forme de réalisation, les éléments en relief peuvent aussi se présenter sous forme de petits prismes, troncs de pyramides, cylindres ou troncs de cône de section polygonale, circulaire ou non.

Dans une troisième forme de réalisation, les éléments en relief forment à leur base des cavités circulaires ou ovoïdes au fond desquelles se trouvent les orifices d'écoulement du café. La profondeur des cavités peut aller de 1 à 7 mm.

Selon une variante d'éxécution des trois formes de réalisation ci-dessus, les éléments en relief constituent une pièce en soi disposée sur une grille d'écoulement.

Selon une autre variante, les éléments en relief peuvent faire partie intégrante d'une plaquette percée des orifices de filtration pour l'écoulement de l'extrait.

Dans une quatrième forme non représentée de réalisation, la disposition relative des éléments en relief et des orifices d'écoulement est inversée. L'élément en relief est constitué d'une pièce comportant des parties en creux par rapport à sa surface principale et des orifices d'écoulement pratiqués au moins dans la partie saillante. La matière se déchire de manière à découvrir les parties saillantes munies des orifices.

Dans une cinquième forme de réalisation, les éléments en relief sont des pièces pyramidales associées à des éléments complémentaires, qui n'ont pas vocation à déchirer la face d'extraction de la cartouche, mais à favoriser l'écoulement du fluide extrait tout en retenant la substance, sous forme par exemple de terrasses de 0.2 à 1 mm de largeur entourant les formes pyramidales et de canaux à la base, larges d'environ 0.7 à 2.5 mm et profonds d'environ 0.3 à 1.8 mm. Ces canaux sont percés de nombreux orifices d'écoulement, calibrés à un diamètre de quelques dixièmes de millimètre.

Dans une première variante, les formes pyramidales sont constituées de pyramides tronquées de 1 à 7 mm de coté et d'une hauteur de 1 à 7 mm, disposées de façon préférentielle selon un quadrillage dont le pas est usuellement compris entre 3 et 10 mm. Les faces présentent un angle préférentiel de 10 à 30° avec la verticale.
La face supérieure des pyramides sert de surface d'appui lorsqu'on soumet le sachet à l'effet de la pression. L'amorce de déchirure se fait sur les arêtes des dites pyramides.

Dans une seconde variante, les formes pyramidales sont constituées de pyramides, entières et/ou partielles, c'est à dire dissymétriques.
Les pyramides dissymétriques peuvent être obtenues, soit avec des pyramides dont les faces verticales ne présentent pas toutes le même angle, soit avec des pyramides à l'origine symétriques mais dont des portions verticales ont été éliminées.

Pour cette cinquième forme de réalisation, les faces des éléments en relief et éventuellement des terrasses et des canaux peuvent présenter des petits sillons (canaux) favorisant l'évacuation de l'extrait, la matière de la face d'extraction présentant une rigidité suffisante ne lui permettant pas d'épouser complètement la forme du sillon.

Plusieurs types de pyramides peuvent coexister dans cette cinquième forme de réalisation.

Dans une sixième forme préférée de réalisation, la hauteur des pyramides et des canaux adjacents n'est pas constante sur toute la surface. Une partie de celle-ci est destinée à ne provoquer l'ouverture du sachet que lorsqu'une pression plus élevée que la valeur usuelle est atteinte, corrigeant ainsi le débit d'extraction en l'augmentant. Cet effet est de préférence obtenu en diminuant la hauteur des pyramides et en augmentant la profondeur des canaux séparant les terrasses. Son but est de régulariser le débit d'un sachet à l'autre, qui sans celà pourrait varier selon le blend de café contenu.

Dans une variante des formes ci-dessus, l'extraction peut se limiter à une zone préférentiellement annulaire de la face inférieure, afin de forcer l'eau à parcourir un chemin maximal dans le lit de café lorsque l'introduction de l'eau est centrale. Réciproquement, la configuration inverse est possible.

Dans tous les cas décrits ci-dessus, les ouvertures de la paroi inférieure du sachet sont la conséquence de la déformation jusqu'à rupture, mais seulement sous l'effet et après la mise en pression par l'eau ou le mélange d'eau et d'air d'extraction.

Au lieu de disposer le sachet dans le porte-sachet qui est ensuite placé dans la machine, on peut prévoir un dispositif dans lequel le porte-sachet fait partie intégrante de la machine dans un système appelé à mâchoire, le sachet étant inséré directement dans la machine et la perforation de la partie supérieure du sachet par les éléments tranchants ou perforants s'effectue lors de la fermeture de la mâchoire.

Dans ce cas, la partie supérieure ou la partie inférieure peut avoir soit un mouvement de rotation selon un axe horizontal ou vertical, soit un mouvement de rabattement, soit un mouvement de tiroir permettant cette insertion. Les deux parties sont rendues solidaires pendant l'extraction par un système de crochets ou tout autre dispositif adéquat. L'avantage de cette solution est qu'au moment du serrage ou du desserrage, il n'y a pas de mouvement rotatif du sachet, ce qui évite l'utilisation de douches ou pyramides tournantes.

Un autre avantage est que la force de serrage avant l'extraction peut être plus élevée grâce à un mécanisme de démultiplication. On peut en plus avec ce système envisager une éjection automatique du sachet après l'extraction dans un bac prévu à cet effet.

Cette disposition permet également de réaliser l'introduction de l'eau et l'extraction du café sur la même face du sachet, le ou les organes d'introduction de l'eau et les éléments en relief étant de préférence concentriques, les uns au centre, les autres en périphérie.

Dans une version simplifiée, le sachet est sorti à l'aide d'une coupelle qui fait partie intégrante ou non du porte-sachet. Cette coupelle peut par exemple revêtir une forme annulaire et s'insérer autour de la partie comportant les éléments en relief. Elle peut être mue par un ressort pour l'éjection du sachet ou être retirée manuellement de la partie inférieure. En l'absence de cette coupelle, l'utilisation d'un sachet muni d'une languette latérale est particulièrement avantageuse.

Il est évident à l'homme de l'art que les diverses variantes ci-dessus peuvent être adaptées pour être intégrées à un dispositif mécanique automatisé qui, par des moyens secondaires connus et dont il ne sera pas fait de description détaillée, assure la mise en place du sachet, le serrage étanche, puis après infusion, le desserrage et le dégagement du sachet usagé. La disposition des pièces respectives peut être modifiée par rapport à celle ci-dessus décrite, la face d'extraction étant par exemple disposée selon un plan vertical ou oblique. L'injection d'eau peut alors lui être perpendiculaire ou non.

Il est bien entendu que tout ce qui a été décrit ci-dessus en relation avec le dispositif selon l'invention et oui concerne les éléments en relief, la pièce d'écoulement, le dispositif d'étanchéité du porte-sachet reste également valable pour le porte-sachet sans qu'il soit nécessaire de répéter la description y relative.

En particulier, le porte-sachet peut être en une ou en deux pièces avec des éléments en relief et en creux avec des pyramides dissimétriques et des ondulations sur la périphérie de la pièce inférieure.

La suite de la description est faite en référence aux dessins sur lesquels:
Fig. 1 est une représentation schématique d'un dispositif d'extraction de sachet souple fermé,
Fig. 1a est une vue agrandie de la partie A de la Fig. 1,
Fig. 2 est une vue en coupe èclatée de la partie supérieure pour l'injection de l'eau dudit dispositif,
Fig. 3 est une vue en plan des diverses pointes d'injection d'eau de la Fig. 2,
Fig. 4 est une représentation schématique partielle d'un dispositif d'extraction de sachet souple fermé, selon un second mode de réalisation
Fig. 5 est une représentation schématique de la partie supérieure pour l'injection de l'eau selon un second mode de réalisation,
Fig. 6 est une vue partielle en plan de la pièce inférieure constituée d'éléments en relief et en creux et d'orifices d'écoulement,
Fig. 7 est une coupe selon la ligne 6-6 de la Fig. 6,
Fig. 8 est une représentation schématique du positionnement des organes d'arrivée d'eau prévus sous la face supérieure du dispositif et des éléments en relief prévus sur la face inférieure pour l'écoulement de l'extrait de café,
Fig. 9 est une représentation schématique du positionnement des organes d'arrivée d'eau prévus sous la face supérieure du dispositif et des éléments en relief prévus sur la face inférieure pour l'écoulement de l'extrait de café, selon un second mode de réalisation,
Fig. 10 est une représentation schématique du positionnement des organes d'arrivée d'eau et d'extraction du café, le tout prévu sur la face inférieure du dispositif selon un troisième mode de réalisation,
Fig. 11 est une repésentation schématique en perspective d'un système d'extraction de sachet souple fermé, selon un troisième mode de réalisation et
Fig. 12 est une représentation schématique de la partie supérieure du système d'extraction selon la Fig. 11.

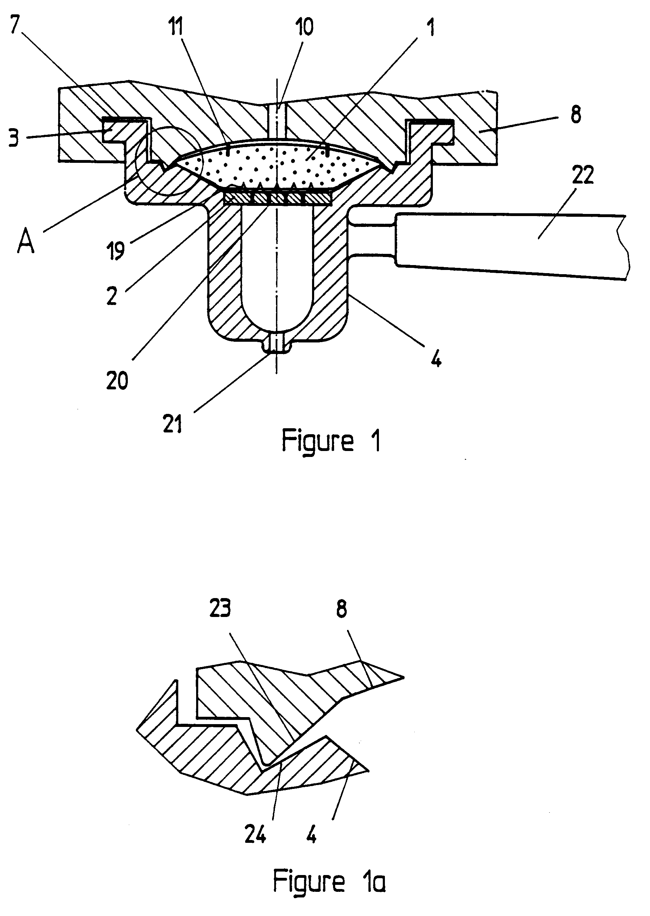

En référence à la Fig. 1, le sachet (1) est disposé sur la pièce inférieure (2) constituant avec son support (4) le porte-sachet. Le support comporte deux pattes de serrage (3) diamètralement opposées et prévues pour s'engager sur les rampes de serrage (7) de la pièce supérieure (8).

La pièce supérieure (8) comporte une arrivée d'eau (10) et des pointes (11) pour percer la face supérieure du sachet (1). la pièce inférieure (2) présent des éléments saillants (19) et des orifices d'écoulement (20).

On opère de la manière suivante: on dispose le sachet (1) sur la pièce inférieure (2) et en maintenant par la poignée (22) l'ensemble support (4), pièce inférieure (2) et sachet (1), on engage les pattes de serrage (3) sur les rampes de serrage (7) de la pièce supérieure (8).

L'étanchéité est assurée en A. Le bord conique inférieur intérieur (23) de la pièce supérieure coopère avec le rebord conique (24) de la pièce inférieure en pinçant la périphérie du sachet (1). Les pointes (11) percent le sachet (1) et l'eau chaude arrive par le canal d'arrivée d'eau (10) et pénètre dans le sachet (1). La pression dans le sachet augmente et la face inférieure du sachet va sa plaquer contre les éléments saillants (19) jusqu'à ce qu'elle se déchire contre lesdits éléments saillants en atteignant sa tension de rupture. La phase d'extraction commence. Le café s'écoule par les orifices d'écoulement (20) et est récupéré sous l'alésage (21) dans un récipient (non représenté).

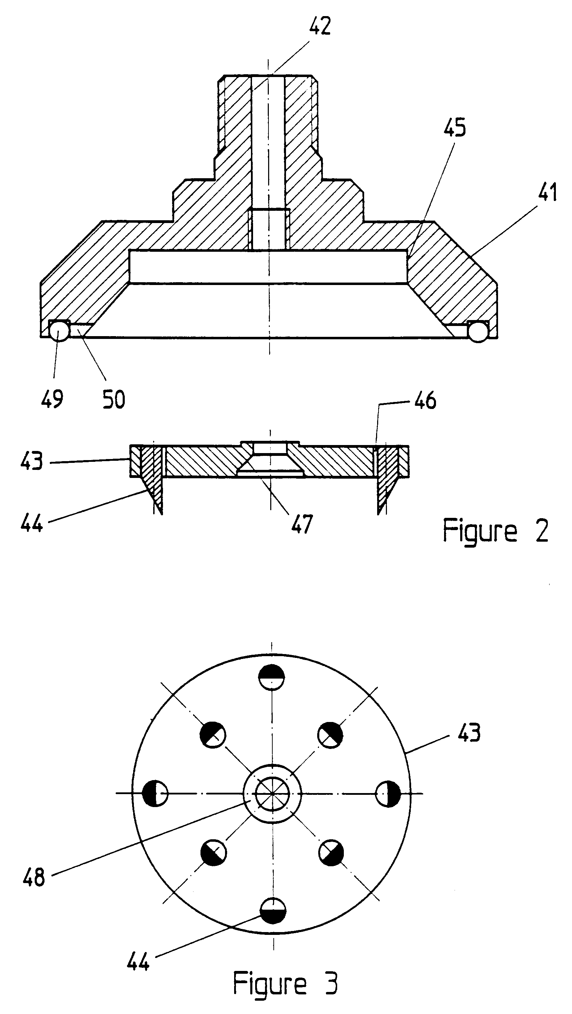

Les Fig. 2 et 3 montrent une partie supérieure pour l'arrivée d'eau différente de celle de la Fig. 1. Cette pièce est en deux parties: la pièce (41) comportant une arrivée d'eau centrale (42) et un disque (43) portant des pointes (44) pour percer la face supérieure du sachet à extraire, ledit disque étant prévu pour se loger dans le logement (45) de la pièce (41). L'alésage (46) du disque (43) est occupé partiellement par les pointes (44), ce qui permet de laisser passer l'eau pour qu'elle pénètre dans le sachet à extraire. Le disque (43) peut tourne dans son logement (45); il est maintenu en place par une vis (48) disposée dans l'alésage (47) du disque (43).

Un joint torique (49) est prévu ainsi que plusieurs canaux d'amenée d'eau (50) disposés sur la périphérie de la pièce (41), de manière à ce que lors de l'extraction, l'eau pousse le joint vers le bas et assure ainsi l'étanchéité du système.

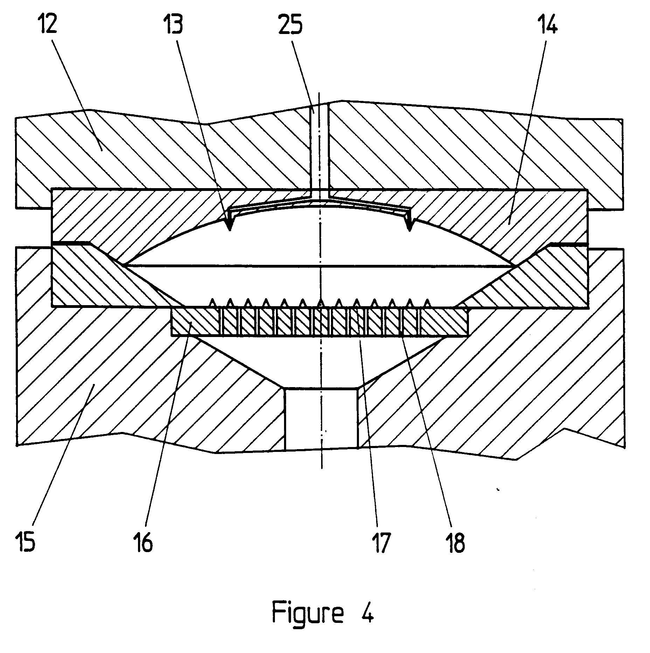

En référence à la Fig. 4, le dispositif d'extraction comprend une pièce supérieure (12) présentant des aiguilles d'injection (13) placée sous la voûte de la cavité. Lors du serrage, les aiguilles d'injection perforent la face supérieure du sachet permettant ultérieurement l'introduction du fluide d'extraction arrivant par le canal (25). Cette pièce supérieure présente un élément saillant (14) d'aspect comique. Cet élément saillant s'emboite dans un cône complémentaire (26) disposé dans la pièce inférieure (15). En s'emboitant l'un dans l'autre lors du serrage des pièces, ces éléments contribuent à tendre les faces du sachet et recentrer la substance pulvérulente.

La pièce inférieure dispose, en outre, d'éléments saillants (17) et des orifices d'écoulement (18) permettant au café de s'écouler.

La Fig. 4 ne représente pas le système de maintien par les pattes et les rampes de serrage. Le mode d'extraction est le même que pour le dispositif de la Fig. 1.

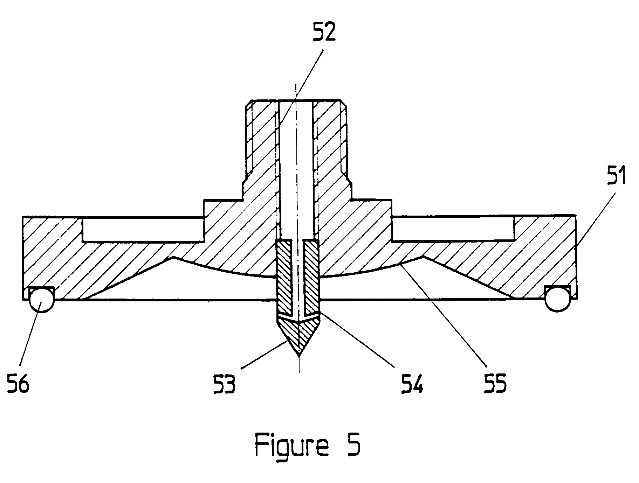

La Fig. 5 représenté un autre mode de réalisation de la partie supérieure d'injection d'eau (51) comportant une arrivée d'eau (52) et une pointe unique (53) pour percer le sachet, ladite pointe comprenant un alésage (54) amenant l'eau dans le sachet. Cette partie (51) comprend une zone concave (55) permettant une meilleure répartition de l'eau, de manière à ce que la face supérieure du sachet se plaque contre ladite zone concave. Elle présente en outre un joint torique (56) pour assurer l'étanchéité.

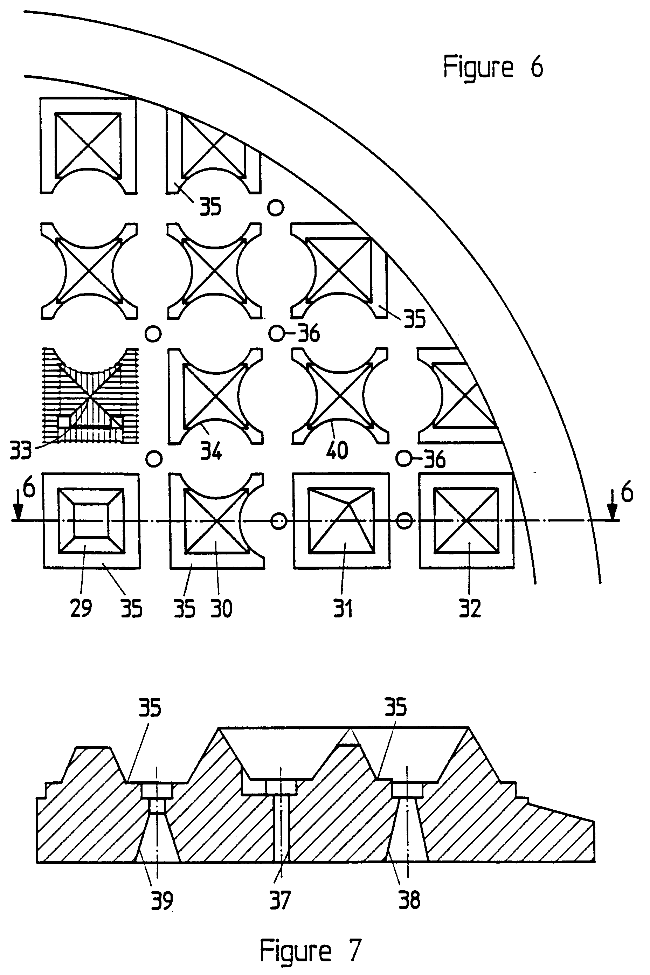

On a selon la Fig. 6 différents types d'éléments pyramidaux en relief. On peut avoir des troncs de pyramide (29), des pyramides (30) tronquées sur 2 faces, des pyramides dissymétriques (31), des pyramides symétriques (32), des pyramides (33) avec ondulations, des pyramides (34) tronquées sur 3 faces et des pyramides (40) tronquées sur quatre faces. Ces pyramides ont toutes des terrasses (35).

Les orifices d'écculement (36) peuvent être de trois formes différentes: cylindriques (37), évasés vers le bas (38) ou cylindriques et évasés vers le bas (39).

La présence de terrasses (35) permet de contrôler l'ouverture (ou déchirure) de la face inférieure du sachet, ce qui permet d'assurer audit sachet une fonction de filtre.

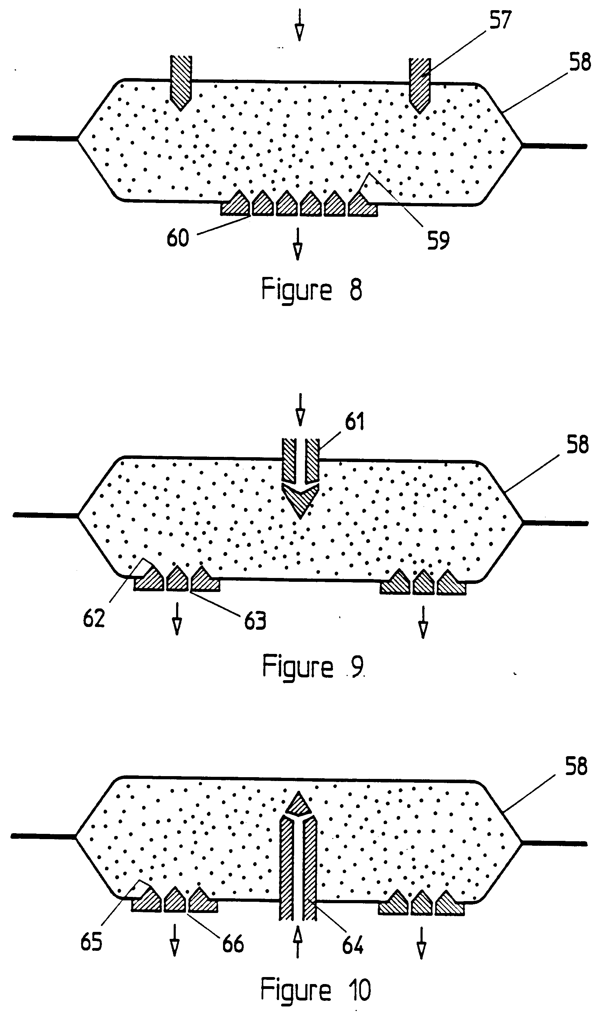

La Fig. 8 montre les organes (57) de percement du sachet (58) et les éléments en relief et en creux (59) disposés autour des orifices d'écoulement (60). C'est un système équivalent à celui des Fig. 1 et 4.

La Fig. 9 montre l'extraction d'un sachet (58) avec une pointe unique (61) et des éléments en relief et en creux (62) et des orifices d'écoulement (63) disposés sur la périphérie du sachet.

Finalement, la Fig. 10 représente une pointe unique (64) d'arrivée d'eau vers le haut et le système de récupération de café sur le même côté comportant des éléments en relief et en creux (65) autour des orifices d'écoulement (66).

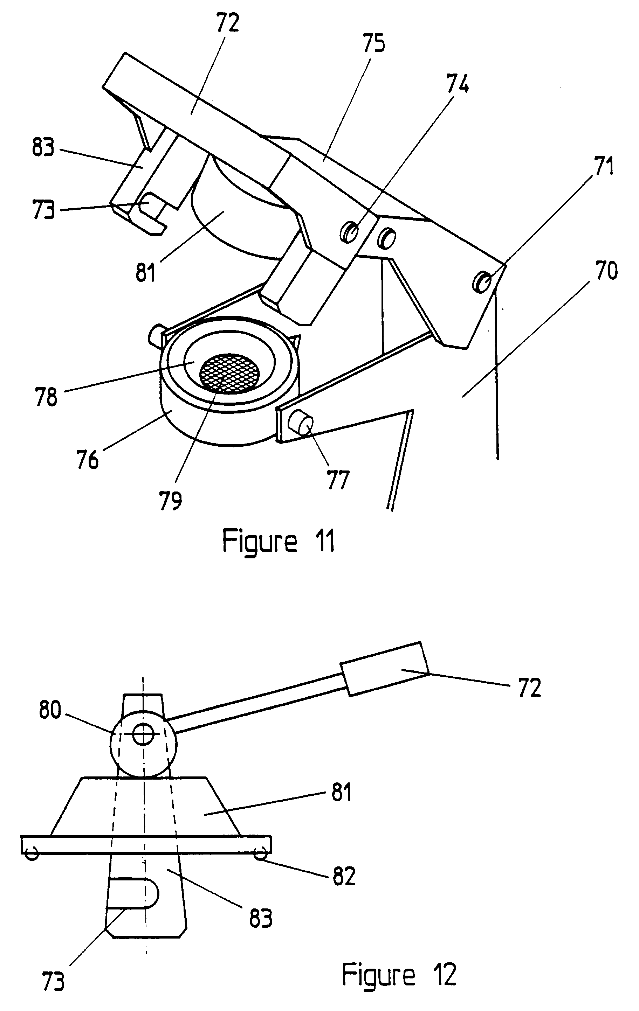

Les Fig. 11 et 12 représentent un système d'extraction comportant un châssis (70) sur lequel est monté à rotation le long de la tige (71) un bras (75) comportant lui-même un levier de blocage (72) avec crochets (73), montés sur un bras (83), ledit levier étant monté à rotation le long de la tige (74). Le bras (75) se ferme sur une partie inférieure (76) montée à rotation le long de la tige (77) et comportant un logement (78) avec éléments en creux et en relief (79) prévu pour recevoir le sachet à extraire.

On opère de la manière suivante: on place le sachet dans le logement (78), on abaisse le bras (75) en appuyant sur le levier de blocage (72) jusqu'à engager les crochets (73) sur la tige (77).

Un excentrique (80) permet de bien serrer la partie supérieure d'arrivée d'eau (81) contre la partie inférieure (76) pour garantir une bonne étanchéité du système en appuyant bien le joint (82). On effectue l'extraction du sachet et on dégage le levier de blocage (72) pour soulever le bras (75). On prévoit avantageusement un moyen permettant de faire pivoter la partie inférieure (76) de manière à éjecter le sachet vers un compartiment prévu dans le châssis (70).

## Revendications

1. Procédé d'extraction de sachets souples fermés étanches (1) contenant au moins une substance pour la préparation d'une boisson, ledit sachet étant constitué de deux feuilles souples et identiques soudées sur leur périphérie et sensiblement symétrique par rapport au plan de soudage dans lequel on met en place et on serre ledit sachet dans son dispositif d'extraction constitué d'une chambre fermée et comportant un porte-sachet (2), on introduit dans le sachet un mélange d'air et d'eau à une pression comprise entre 2 et 20 bar, au moyen d'un organe d'amenée d'eau (8) comportant des moyens (11) destinés à perforer la face supérieure du sachet, de manière à étirer progressivement et localement la face d'extraction du sachet contre une surface en relief (19) du porte-sachet comportant des éléments en relief et en creux, ladite face d'extraction se déchirant en des endroits multiples selon un tracé prédéterminé par l'emplacement desdits éléments en relief et/ou en creux en y atteignant sa tension de rupture, pour permettre l'écoulement du liquide après extraction caractérisé en ce que le porte-sachet (2) et l'organe d'amenée d'eau (8) respectivement, sont équipés avec un rebord conique et un bord conique inférieur qui coopérant entre eux pour assurer l'étanchéité (A) par pincement du bord du sachet et ménagent entre eux, chacun sensiblement pour moitié, une cavité assurant une forme définie du sachet.

2. Procédé selon la revendication 1, caractérisé en ce que la forme du sachet (1) est modifiée par rapport à sa forme initiale par adaptation à la configuration de la cavité du dispositif d'extraction.

3. Procédé selon la revendication 1, caractérisé en ce que l'opération de mise en place comporte un effet de serrage qui réduit le volume intérieur disponible du sachet (1) afin de limiter à un minimum défini les endroits non remplis par la substance à extraire.

4. Procédé selon l'une quelconque des revendications 1 à 3, caractérisé en ce que la face supérieure souple du sachet vient, sous l'effet de la pression de l'eau et du gonflement du café, se plaquer contre la face supérieure de la chambre, améliorant d'autant le mouillage du café et la qualité de son extraction.

5. Procédé selon l'une quelconque des revendications 1 à 4, caractérisé en ce que des moyens auxiliaires prévus sous la face supérieure du dispositif d'extraction et/ou sur la face inférieure dudit dispositif, permettent de déplacer le café du sachet vers des zones déterminées et privilégiées afin de favoriser la qualité de l'extraction en évitant les zones mortes.

6. Procédé selon l'une quelconque des revendications 1 à 5, caractérisé en ce que la matière constituant la face d'extraction du sachet atteignant, suite à son étirage, sa tension de rupture, les déchirures s'amorcent à l'emplacement des parties saillantes (29, 30, 31, 32, 33, 34, 40) du relief ou dans les parties creuses (35) formées entre lesdites parties en relief et en ce que les parties ainsi fracturées sans se détacher de la face d'extraction libérée de sa tension viennent s'appliquer précisément contre le relief avec pour effet d'agrandir les ouvertures réalisées, favorisant l'écoulement ultérieur du fluide d'extraction, mais de telle manière qu'aucune dispersion de matière ne se fasse en dehors du sachet.

7. Procédé selon l'une quelconque des revendications 1 à 6 caractérisé en ce que des ouvertures complémentaires de la face d'extraction peuvent au besoin être produites par les parties en relief (19) du porte-sachet de hauteur dégressive prévues de préférence en sa zone périphérique lorsque la pression d'extraction atteint des valeurs élevées.

8. Procédé selon l'une quelconque des revendications 1 à 7, caractérisé par le fait que la pression d'extraction atteint, lorsque la perte de charge à travers le lit de substance est à son maximum, une valeur supérieure à la valeur initiale provoquant l'ouverture du sachet.

9. Procédé selon l'une des revendications 1 à 8, caractérisé en ce que l'introduction de l'eau et l'extraction du café s'effectuent sur la même face du sachet.

10. Dispositif pour la mise en oeuvre du procédé selon l'une quelconque des revendications 1 à 9, comprenant une pièce supérieure (8) munie des moyens (13) destinés à perforer la face supérieure du sachet (1) et permettant l'introduction de l'eau dans ledit sachet, un porte sachet (2) présentant des éléments (19) en relief et en creux constituant la zone d'écoulement caractérisé en ce que le porte sachet et la partie supérieure, respectivement, sont équipés avec un rebord conique et un bord conique inférieur qui coopèrent entre eux pour assurer l'étanchéité par pincement du bord du sachet et ménagent entre elles, chacune sensiblement pour moitié, une cavité assurant une forme définie du sachet, non nécessairement identique à la forme initiale du sachet, le serrage étant assuré par l'intermédiaire de moyens de fixation annexe (3,7) rendant solidaires lesdites pièces supérieure et inférieure.

11. Dispositif selon la revendication 10, caractérisé en ce que la pièce supérieure (8) et/ou la pièce inférieure (2) présente une géométrie contribuant à déplacer la substance à extraire à l'intérieur du sachet en des endroits déterminés et privilégiés.

12. Dispositif selon l'une des revendications 10 ou 11, caractérisé en ce que les moyens de fixation de la pièce inférieure sont constitués par au moins deux pattes de serrage (3) coopérant avec au moins deux rampes de serrage (7) solidaires de la pièce supérieure.

13. Dispositif selon l'une quelconque des revendications 10 à 12, caractérisé en ce que les moyens de fixation de la pièce inférieure et ladite pièce font partie intégrante d'un dispositif mécanique automatisé permettant la mise en place du sachet dans la pièce inférieure et le serrage et desserrage du porte cartouche.

14. Dispositif selon l'une quelconque des revendications 10 à 13, caractérisé en ce que la partie supérieure du dispositif comporte une fixation ayant la forme d'un anneau sphérique dont le centre de courbure coïncide avec l'axe perpendiculaire au plan de la surface d'appui du sachet, cette fixation sphérique prenant appui sur un siège présentant une surface de même courbure, solidaire de la pièce supérieure et constituant un assemblage à rotule.

15. Dispositif selon l'une quelconque des revendications 10 à 14, caractérisé en ce que les aiguilles d'introduction de l'eau (11,13) sont solidaires d'une pièce capable d'un mouvement rotatif, ce mouvement étant alors synchronisé par entraînement lors de l'insertion du porte-sachet.

16. Dispositif selon l'une quelconque des revendications 10 à 15, caractérisée en ce que les aiguilles d'introduction de l'eau, (11,13) sont conçues selon une forme effilée, de telle manière qu'elles perforent le matériau du sachet selon des ouvertures capables de se refermer au moins partiellement, afin de minimaliser le dégorgement lors du retrait du sachet et qu'elles n'empêchant pas le sachet de se gonfler et de se plaquer contre la paroi avoisinante.

17. Dispositif selon l'une quelconque des revendications 10 à 16 caractérisé en ce que la pièce inférieure (2) comprend des parties en relief de hauteur dégressive prévues de préférence en sa zone périphérique.

18. Dispositif selon une ou plusieurs des revendications 10 à 17 caractérisé en ce que le sachet (1) est inséré directement dans la machine dont la partie supérieure (75) ou la partie inférieure (76) a soit un mouvement de rotation selon un axe horizontal ou vertical, soit un mouvement de rabattement, soit un mouvement à tiroir permettant cette insertion, les deux parties étant rendues solidaires pendant l'extraction par un système de crochets (73) ou tout autre dispositif adéquat.

19. Dispositif selon l'une quelconque des revendications 10 à 18, caractérisé en ce que le dispositif d'étanchéité comporte un joint souple (49, 56) placé en périphérie du porte-sachet qui se situe libre dans un logement lui permettant, sous la pression de l'eau qui se trouve entre le joint et le fond du logement, de pousser ledit joint et l'amener à s'écraser contre le bord du sachet.

20. Dispositif selon l'une des revendications 18 ou 19 caractérisé en ce que le sachet est sorti à l'aide d'une coupelle qui fait partie intégrante ou non du porte-sachet.

21. Porte-sachet comprenant une pièce inférieure (2) recevant le sachet (1) et le support (4) de cette pièce en combinaison avec une pièce supérieure (8) pour assurer l' étanchéité par pincement du bord du sachet, ladite pièce inférieure comprenant des éléments en relief et en creux (19) pour déchirer la face d'extraction du sachet, des orifices d'écoulement (18) étant prévus pour permettre l'écoulement du liquide caractérisé en ce que le porte-sachet et la pièce superiéure sont équipés avec un rebord conique et un bord conique inférieur respectivement, qui coopèrent entre eux pour assurer l'étancheité par pincement du bord du sachet et ménagent entre eux une cavité assurant une forme définie du sachet.

22. Porte-sachet selon la revendication 21, caractérisé en ce que les éléments en relief et en creux (19) sont sous la forme de pyramides dissymétriques.

23. Porte-sachet selon la revendication 21 ou 22, caractérisé en ce que la pièce inférieure (2) présente des ondulations sur sa périphérie.

## Claims

1. Method for extracting watertight, sealed, flexible bags (1) containing at least one substance for the preparation of a beverage, the said bag consisting of two identical flexible sheets welded along their periphery and substantially symmetrical with respect to the welding plane wherein the said bag is put in place and clamped in its extraction device consisting of a closed chamber and having a bag carrier (2), a mixture of air and water is introduced into the bag at a pressure of between 2 and 20 bar by means of a water feed device (8) having means (11) designed to pierce the upper surface of the bag, so as to stretch progressively and locally the extraction surface of the bag against an embossed surface (19) of the bag carrier having protruding and recessed elements, the said extraction surface tearing at a multiplicity of places along a path predetermined by the position of the said raised and/or recessed elements while reaching its breaking tension, so as to allow the liquid to flow out following extraction, characterized in that the bag carrier (2) and the water feed device (8) respectively are fitted with a conical flange and a lower conical rim which cooperate together to ensure watertightness (A) by pinching the edge of the bag and each providing substantially half a cavity giving a definite shape to the bag.

2. Method according to claim 1, characterized in that the shape of the bag (1) is modified in relation to its initial shape by adapting the configuration of the cavity of the extraction device.

3. Method according to claim 1, characterized in that the positioning operation includes a clamping effect which reduces the available inner volume of the bag (1) so as to limit to a defined minimum the parts not filled with the substance to be extracted.

4. Method according to any one of claims 1 to 3, characterized in that the upper flexible surface of the bag is pressed against the upper surface of the chamber, under the effect of water pressure and the swelling of the coffee, improving both the wetting of the coffee as well as the quality of its extraction.

5. Method according to any one of claims 1 to 4, characterized in that auxiliary means provided under the upper surface of the extraction device and/or on the lower surface of the said device, enable the coffee in the bag to be moved towards determined and preferred zones so as to improve the quality of extraction by preventing dead zones.

6. Method according to any one of claims 1 to 5, characterized in that when the material constituting the extraction surface of the bag reaches its breaking tension, after it has been stretched, tears start to form at the location of the protruding parts (29, 30, 31, 32, 33, 34, 40) of the embossed area or in the recessed parts (35) formed between the said protruding parts and in that the parts fractured in this way without being detached from the extraction surface freed from its tension are precisely applied against the protrusion with the effect of widening the openings produced, encouraging the subsequent outflow of the extraction fluid, but in such a manner that no material is dispersed outside the bag.

7. Method according to any one of claims 1 to 6, characterized in that complementary openings may be produced as required on the extraction surface by the protruding parts (19) of the bag carrier with a decreasing height, preferably provided in its peripheral zone when the extraction pressure reaches high values.

8. Method according to any one of claims 1 to 7, characterized in that the extraction pressure when the pressure loss across the bed of the substance is at its maximum, reaches a value greater than the initial value causing the bag to open.

9. Method according to one of claims 1 to 8, characterized in that the introduction of water and the extraction of coffee is carried out on the same surface of the bag.

10. Device for implementing the method according to any one of claims 1 to 9, comprising an upper part (8) provided with means (13) designed to perforate the upper surface of the bag (1) and enabling water to be introduced into the said bag, a bag carrier (2) having protruding and recessed elements (19) constituting the outflow zone, characterized in that the bag carrier and the upper part respectively are fitted with a conical flange and a lower conical rim which cooperate together to ensure watertightness by pinching the edge of the bag and each providing substantially half of a cavity giving a definite shape to the bag, not necessarily identical to the initial shape of the bag, clamping being achieved by means of auxiliary fastening members (3, 7) firmly fixing the said upper and lower parts together.

11. Device according to claim 10, characterized in that the upper part (8) and/or the lower part (2) have a geometry contributing to the movement of the substance to be extracted inside the bag in determined and preferred places.

12. Device according to either of claims 10 or 11, characterized in that the means for attaching the lower part consist of at least two clamping lugs (3) cooperating with at least two clamping inclines (7) fixed to the upper part.

13. Device according to any one of claims 10 to 12, characterized in that the means for attaching the lower part and the said part form an integral part of an automatic mechanical device enabling the bag to be put in place in the lower part and enabling the cartridge carrier to be clamped and unclamped.

14. Device according to any one of claims 10 to 13, characterized in that the upper part of the device has an attachment having the shape of a spherical ring of which the centre of curvature coincides with the axis perpendicular to the plane of the surface supporting the bag, this spherical attachment resting on a seat having a surface with the same curvature, fixed to the upper part and constituting a ball joint assembly.

15. Device according to any one of claims 10 to 14, characterized in that the needles for introducing water (11, 13) are fixed to a part capable of a rotating movement, this movement being then synchronized by entrainment when the bag carrier is inserted.

16. Device according to any one of claims 10 to 15, characterized in that the needles for introducing water (11, 13) are designed in a tapered shape, so that they perforate the material of the bag in openings capable of closing again, at least partially, so as to minimize outflow when the bag is withdrawn but which do not prevent the bag from inflating and becoming pressed against the adjacent wall.

17. Device according to any one of claims 10 to 16, characterized in that the lower part (2) includes protruding parts with a decreasing height preferably provided in its peripheral zone.

18. Device according to one or more of claims 10 to 17, characterized in that the bag (1) is inserted directly in the machine of which the upper part (75) or the lower part (76) has either a rotational movement about a horizontal or vertical axis, or a tilting movent, or a sliding movement enabling this insertion to take place, the two parts being fixed together during extraction, by means of a system of hooks (73) or any other suitable device.

19. Device according to any one of claims 10 to 18, characterized in that the watertight device includes a flexible joint (49, 56) placed at the periphery of the bag carrier which is situated free in a housing which enables it, under the pressure of the water existing between the joint and the bottom of the housing, to push the said joint and to cause it to be crushed against the edge of the bag.

20. Device according to either of claims 18 or 19, characterized in that the bag is withdrawn with the aid of a dish which forms or does not form an integral part of the bag carrier.

21. Bag carrier comprising a lower part (2) receiving the bag (1) and the support (4) for this part in combination with an upper part (8) to ensure watertightness by pinching the edge of the bag, the said lower part having protruding and recessed elements (19) for tearing the extraction surface of the bag, outflow orifices (18) being provided to enable the liquid to flow out, characterized in that the bag carrier and the upper part are fitted with a conical flange and a lower conical edge respectively which cooperate together to ensure watertightness by pinching the edge of the bag and providing between them a cavity giving a definite shape to the bag.

22. Bag carrier according to claim 21, characterized in that the protruding and recessed elements (19) are in the form of asymmetrical pyramids.

23. Bag carrier according to claim 21 or 22, characterized in that the lower part (2) has undulations on its periphery.

## Patentansprüche

1. Verfahren zum Extrahieren von dichten geschlossenen flexiblen Portionspackungen (1), die mindestens eine Substanz zur Zubereitung eines Getränks enthalten und jeweils aus zwei identischen flexiblen Folien bestehen, die an ihrem Umfang miteinander verschweißt sind und bezüglich der Schweißebene im wesentlichen zueinander symmetrisch sind, in welchem man diese Portionspackung in ihre Extraktionsvorrichtung einsetzt und festklemmt, die aus einer geschlossenen Kammer besteht und einen Portionspackungshalter (2) aufweist, in die Portionspackung ein Wasser-Luft-Gemisch mit einem Druck zwischen 2 und 20 bar mit Hilfe eines Wasserzufuhrorgans (8) einführt, das Einrichtungen (11) aufweist, die dazu bestimmt sind, die obere Seite der Portionspackung zu perforieren, so daß die Extraktionsseite der Portionspackung an einer profilierten, erhabene und vertiefte Elemente aufweisenden Oberfläche (19) des Portionspackungshalters allmählich örtlich gereckt wird, wobei die Extraktionsseite an mehreren Stellen nach einem durch die Lage dieser erhabenen und/oder vertieften Elemente vorbestimmten Muster reißt, indem sie an diesen Stellen ihre Reißspannung erreicht, um das Abfließen der Flüssigkeit nach der Extraktion zu gestatten, dadurch gekennzeichnet, daß der Portionspackungshalter (2) und das Wasserzufuhrorgan (8) mit einer konischen Umrandung bzw. einem unteren konischen Rand versehen sind, die zusammenwirken, um durch Einklemmen des Randes der Portionspackung die Dichtung (A) herzustellen, und miteinander jeweils im wesentlichen zur Hälfte einen Hohlraum bilden, der der Portionspakkung eine endgültige Form verleiht.

2. Verfahren nach Anspruch 1, dadurch gekennzeichnet, daß die Form der Portionspackung (1) durch Anpassung an die Ausbildung des Hohlraumes der Extraktionsvorrichtung bezüglich ihrer ursprünglichen Form verändert wird.

3. Verfahren nach Anspruch 1, dadurch gekennzeichnet, daß der Einsetzvorgang einen Einklemmeffekt beinhaltet, der das verfügbare Innenvolumen der Portionspackung (1) verringert, um die nicht mit der zu extrahierenden Substanz gefüllten Stellen auf ein definiertes Minimum zu beschränken.

4. Verfahren nach einem der Ansprüche 1 bis 3, dadurch gekennzeichnet, daß die flexible Oberseite der Portionspakkung unter der Wirkung des Drucks des Wasser und des Quellens des Kaffees an die Oberseite der Kammer angedrückt wird, was die Benetzung des Kaffees und die Qualität seiner Extraktion verbessert.

5. Verfahren nach einem der Ansprüche 1 bis 4, dadurch gekennzeichnet, daß Zusatzeinrichtungen, die unter der Oberseite der Extraktionsvorrichtung und/oder auf der Unterseite dieser Vorrichtung vorgesehen sind, die Verlagerung des Kaffees der Portionspackung auf bestimmte bevorzugte Bereiche zu gestatten, um die Qualität der Extraktion durch Vermeidung von toten Bereichen zu verbessern.

6. Verfahren nach einem der Ansprüche 1 bis 5, dadurch gekennzeichnet, daß, wenn der die Extraktionsseite der Portionspackung bildende Werkstoff infolge seines Reckens seine Reißspannung erreicht, die Risse an der Stelle der vorspringenden Teile (29, 30, 31, 32, 33, 34, 40) des Reliefs oder in den zwischen diesen erhabenen Teilen bestehenden vertieften Bereichen (35) entstehen und daß die Teile, die auf diese Weise getrennt werden, ohne sich von der von ihrer Spannung befreiten Extraktionsseite zu lösen, genau an das Relief zum Anliegen kommen, was zur Wirkung hat, daß die hergestellten Öffnungen vergrößert werden, was das anschließende Abfließen des Extraktionsfluids begünstigt, und zwar so, daß keine Substanz aus der Portionspackung ausgestreut wird.

7. Verfahren nach einem der Ansprüche 1 bis 5, dadurch gekennzeichnet, daß bei Bedarf durch die erhabenen Teile (19) des Portionspackungshalters, die eine allmählich abnehmende Höhe besitzen und vorzugsweise in dessen Umfangsbereich vorgesehen sind, ergänzende Öffnungen der Extraktionsseite erzeugt werden können, wenn der Extraktionsdruck hohe Werte erreicht.

8. Verfahren nach einem der Ansprüche 1 bis 7, dadurch gekennzeichnet, daß der Extraktionsdruck, wenn der Druckabfall im Substanzbett auf seinem Maximum ist, einen Wert erreicht, der über dem Anfangswert liegt, der die Öffnung des Portionspackung bewirkt.

9. Verfahren nach einem der Ansprüche 1 bis 8, dadurch gekennzeichnet, daß die Einführung des Wassers und die Extraktion des Kaffees auf derselben Seite der Portionspackung stattfinden.

10. Vorrichtung zur Durchführung des Verfahrens nach einem der Ansprüche 1 bis 9, die ein oberes Teil (8) aufweist, das mit Einrichtungen (13) versehen ist, die zum Perforieren der Oberseite der Portionspackung (1) bestimmt sind und die Einführung des Wassers in die Portionspackung gestatten, sowie einen Portionspackungshalter (2), der erhabene und vertiefte Elemente (19) aufweist, die den Ablaufbereich bilden, dadurch gekennzeichnet, daß der Portionspackungshalter und das obere Teil mit einer konischen Umrandung bzw. einem unteren konischen Rand versehen sind, die zusammenwirken, um durch Einklemmen des Rands der Portionspackung die Abdichtung zu gewährleisten, und miteinander jeweils im wesentlichen zur Hälfte einen Hohlraum bilden, der die Portionspackung in eine endgültige Form bringt, die nicht notwendigerweise mit ihrer Anfangsform identisch ist, wobei die Einklemmung über angesetzte Befestigungseinrichtungen (3, 7) gewährleistet wird, die den oberen und den unteren Teil miteinander fest verbinden.

11. Vorrichtung nach Anspruch 10, dadurch gekennzeichnet, daß das obere Teil (8) und/oder das untere Teil (2) eine Geometrie aufweisen, die dazu beiträgt, die zu extrahierende Substanz im Inneren der Portionspackung an bestimmte bevorzugte Stellen zu verlagern.

12. Vorrichtung nach einem der Ansprüche 10 oder 11, dadurch gekennzeichnet, daß die Befestigungseinrichtungen des unteren Teils aus mindestens zwei Klemmlappen (3) bestehen, die mit mindestens zwei Klemmrampen (7) zusammenwirken, die mit dem oberen Teil fest verbunden sind.

13. Vorrichtung nach einem der Ansprüche 10 bis 12, dadurch gekennzeichnet, daß die Befestigungseinrichtungen des unteren Teils und dieses Teil selbst einen integrierenden Bestandteil einer automatisierten mechanischen Vorrichtung bilden, die das Einsetzen der Portionspackung in das untere Teil und das Einspannen und Lösen des Portionspackungshalters gestattet.

14. Vorrichtung nach einem der Ansprüche 10 bis 13, dadurch gekennzeichnet, daß der obere Teil der Vorrichtung eine Befestigung in Form eines sphärischen Rings besitzt, dessen Krümmungsmittelpunkt mit der zur Ebene der Auflagefläche der Portionspackung senkrechten Achse zusammenfällt, wobei diese sphärische Befestigung auf einem eine Fläche mit derselben Krümmung aufweisenden Sitz aufliegt, der mit dem oberen Teil fest verbunden ist und eine Kugelgelenkeinheit bildet.

15. Vorrichtung nach einem der Ansprüche 10 bis 14, dadurch gekennzeichnet, daß die Nadeln (11, 13) zur Einführung des Wassers mit einem Teil fest verbunden sind, das eine Drehbewegung ausführen kann, die beim Einsetzen des Portionspackungshalters synchron mitgenommen wird.

16. Vorrichtung nach einem der Ansprüche 10 bis 15, dadurch gekennzeichnet, daß die Nadeln (11, 13) zur Einführung des Wassers mit einer zugespitzten Form ausgeführt sind, so daß sie den Werkstoff der Portionspackung unter Bildung von Öffnungen perforieren, die sich mindestens partiell wieder schließen können, damit sie das Überlaufen bei der Entnahme der Portionspackung minimieren und das Aufblähen und Anlegen der Portionspackung an die benachbarte Wand nicht verhindern.

17. Vorrichtung nach einem der Ansprüche 10 bis 16, dadurch gekennzeichnet, daß das untere Teil (2) erhabene Teile mit allmählich abnehmender Höhe aufweist, die vorzugsweise in seinem Umfangsbereich vorgesehen sind.

18. Vorrichtung nach einem oder mehreren der Ansprüche 10 bis 17, dadurch gekennzeichnet, daß die Portionspackung (1) direkt in die Maschine eingesetzt ist, deren oberer Teil (75) oder deren unterer Teil (76) eine Drehbewegung um eine horizontale oder um eine vertikale Achse, eine Klappbewegung oder eine Einschubbewegung ausführt, die dieses Einsetzten gestattet, wobei die beiden Teile während der Extraktion durch eine Hakensystem (73) oder jede andere geeignet Vorrichtung miteinander fest verbunden sind.

19. Vorrichtung nach einem der Ansprüche 10 bis 18, dadurch gekennzeichnet, daß die Dichtungsvorrichtung einen flexiblen Dichtring (49, 56) aufweist, der am Umfang des Portionspackungshalters angeordnet ist und in einer Aussparung frei angeordnet ist, so daß der Dichtring unter dem Druck des zwischen ihm und dem Boden der Aussparung befindlichen Wassers gedrückt und an den Rand der Portionspackung angequetscht werden kann.

20. Vorrichtung nach einem der Ansprüche 18 oder 19, dadurch gekennzeichnet, daß die Portionspackung mit Hilfe einer Schale herausgenommen wird, die einen integrierenden Bestandteil des Portionspackungshalters bildet oder nicht.

21. Portionspackungshalter, der ein die Portionspackung (1) aufnehmendes unteres Teil (2) und den Träger (4) dieses Teils aufweist, in Kombination mit einem oberen Teil (8), um die Abdichtung durch Einklemmen des Randes der Portionspackung zu gewährleisten, wobei das untere Teil erhabene und vertiefte Elemente (19) aufweist, um die Extraktionsseite der Portionspackung zu zerreißen, wobei Ablauföffnungen (18) vorgesehen sind, um das Ablaufen der Flüssigkeit zu gestatten, dadurch gekennzeichnet, daß der Portionspackungshalter und das obere Teil mit einer konischen Umrandung bzw. mit einem unteren konischen Rand ausgerüstet sind, die zur Abdichtung durch Einklemmen des Randes der Portionspackung zusammenwirken, und miteinander einen Hohlraum bilden, der die Portionspackung in eine endgültige Form bringt.

22. Portionspackungshalter nach Anspruch 21, dadurch gekennzeichnet, daß die erhabenen und vertieften Elemente (19) die Form von unsymmetrischen Pyramiden haben.

23. Portionspackungshalter nach Anspruch 21 oder 22, dadurch gekennzeichnet, daß das untere Teil (2) auf seinem Umfang Wellen aufweist.
